# EUROPÄISCHE PATENTSCHRIFT

(11) **EP 3 292 291 B1**
(45) Veröffentlichungstag und Bekanntmachung des Hinweises auf die Patenterteilung: **29.07.2020**
(21) Anmeldenummer: 16716876.4
(22) Anmeldetag: 18.04.2016
(51) Int. Cl.: F02D 41/22, F02M 25/022, F02D 41/00

(54) **WASSEREINSPRITZVORRICHTUNG EINER BRENNKRAFTMASCHINE UND VERFAHREN ZUM BETREIBEN EINER SOLCHEN WASSEREINSPRITZVORRICHTUNG**
WATER INJECTION DEVICE OF AN INTERNAL COMBUSTION ENGINE, AND METHOD FOR OPERATING A WATER INJECTION DEVICE OF SAID TYPE
DISPOSITIF D'INJECTION D'EAU D'UN MOTEUR À COMBUSTION INTERNE ET PROCÉDÉ PERMETTANT DE FAIRE FONCTIONNER LEDIT DISPOSITIF D'INJECTION D'EAU

(30) Priorität: 07.05.2015 DE 102015208489
(43) Veröffentlichungstag der Anmeldung: 14.03.2018
(73) Patentinhaber: Robert Bosch GmbH, 70442 Stuttgart (DE)
(72) Erfinder: OBERGFAELL, Simon, 71336 Waiblingen (DE); BURAK, Ingmar, 70437 Stuttgart (DE); SCHENK, Peter, 71640 Ludwigsburg (DE)
(86) Internationale Anmeldenummer: PCT/EP2016/058509
(87) Internationale Veröffentlichungsnummer: WO 2016/177558

(56) Entgegenhaltungen:
- WO-A1-2005/071249
- GB-A- 2 146 387

## Beschreibung

### Stand der Technik

Die vorliegende Erfindung betrifft eine Wassereinspritzvorrichtung einer Brennkraftmaschine sowie eine derartige Brennkraftmaschine. Ein weiterer Aspekt der Erfindung betrifft ein Verfahren zum Betreiben einer derartigen Wassereinspritzvorrichtung.

Aufgrund steigender Anforderungen an reduzierte Kohlenstoffdioxidemissionen werden Brennkraftmaschinen zunehmend hinsichtlich Kraftstoffverbrauchs optimiert. Allerdings können bekannte Brennkraftmaschinen in Betriebspunkten mit hoher Last nicht optimal hinsichtlich des Verbrauchs betrieben werden, da der Betrieb durch Klopfneigung und hohe Abgastemperaturen begrenzt ist. Eine mögliche Maßnahme zur Reduzierung der Klopfneigung und zur Senkung der Abgastemperaturen ist die Einspritzung von Wasser. Hierbei sind üblicherweise separate Wassereinspritzsysteme vorhanden, um die Wassereinspritzung zu ermöglichen. So ist z.B. aus der WO 2014/080266 A1 ein Wassereinspritzsystem für eine Brennkraftmaschine mit Abgasrückführung bekannt, bei dem das Wasser in den Massenstrom der Abgasrückführung eingespritzt wird. Ebenso zeigen die Dokumente GB 2 146 387 A und WO 2005/071249 A1 ein solches Wassereinspritzsystem.

Zwischen den Betriebspunkten, bei denen das Wassereinspritzsystem aktiviert wird, ist die zum Fördern des Wassers benutzte Pumpe abgeschaltet. Das heißt, dass das Wasser in den Injektoren und den Leitungen des Wassereinspritzsystems steht. Durch die hohen Temperaturen der Teile der Brennkraftmaschine in der Nähe des Wassereinspritzsystems kann das stehende Wasser aufheizen und eventuell verdampfen. Dieser Effekt verschärft sich bei Fahrten in großer Höhe, wo der Luftdruck niedriger ist. Durch die Dampfbildung kann es zu Funktionsbeeinträchtigungen beim erneuten Start des Wassereinspritzsystems kommen, da der Systemdruck durch den Dampf nur verzögert aufgebaut werden kann. Somit ist das Wassereinspritzsystem verzögert betriebsbereit. Aufgrund dieser verzögerten Betriebsbereitschaft kann es bei schnellen Lastsprüngen zu Temperaturspitzen im Abgas sowie Klopfereignissen in der Verbrennung kommen.

### Offenbarung der Erfindung

Die erfindungsgemäße Wassereinspritzvorrichtung mit den Merkmalen des Anspruchs 1 weist demgegenüber den Vorteil auf, dass eine beginnende Dampfbildung in einfacher und direkter Weise erkannt wird. Dies wird erfindungsgemäß durch eine Wassereinspritzvorrichtung einer Brennkraftmaschine erreicht, welche einen Wassertank zur Speicherung von Wasser, ein Förderelement zur Förderung des Wassers, wobei das Förderelement mit dem Wassertank verbunden ist, mindestens einen Wasserinjektor zum Einspritzen von Wasser, welcher mit dem Förderelement verbunden ist, einen Drucksensor, welcher in einem Leitungsbereich zwischen dem Förderelement und dem Wasserinjektor angeordnet ist, und eine Steuereinheit umfasst. Erfindungsgemäß ist die Steuereinheit eingerichtet, basierend auf Druckdaten des Drucksensors eine Dampfbildung im vorgenannten Leitungsbereich bei geschlossenem Wasserinjektor und ausgeschaltetem Förderelement zu bestimmen. Da durch die erfindungsgemäße Steuereinheit eine Dampfbildung bestimmt wird, können auch Maßnahmen schnell eingeleitet werden, um eine Weiterbildung von Dampf zu vermeiden und/oder den schon entstandenen Dampf zu reduzieren. Somit werden kurze Druckaufbauzeiten und eine schnelle Einspritzfreigabe sichergestellt, ohne dass zusätzliche Komponenten, wie z.B. ein Absperrelement, erforderlich sind. Dies führt zu einem kostengünstigen und kompakten Aufbau sowie zu einer einfachen Steuerung der Wassereinspritzvorrichtung.

Die Unteransprüche zeigen bevorzugte Weiterbildungen der Erfindung.

Bevorzugt ist die Steuereinheit eingerichtet, einen ersten Druckwert mit einem zweiten Druckwert zu vergleichen, wobei der erste Druckwert zu einem ersten Zeitpunkt und der zweite Druckwert zu einem zweiten Zeitpunkt erfasst sind, und eine Dampfbildung im Leitungsbereich zwischen dem Förderelement und dem Wasserinjektor zu bestimmen, wenn ein Unterschied zwischen dem ersten Druckwert und dem zweiten Druckwert größer als ein erster Sollwert ist, wobei der erste Sollwert bei dampffreier Wassereinspritzvorrichtung bestimmt ist. Da die bestimmte Druckdifferenz größer als die erwartete Druckdifferenz ist, deutet dies an, dass es Dampf im Leitungsbereich gibt.

Insbesondere wird eine Dampfbildung erkannt, wenn ein Unterschied zwischen dem ersten Druckwert und dem zweiten Druckwert größer als 0.1 x 10⁵ Pa, besonders bevorzugt größer als 0.2 x 10⁵ Pa ist. In einem solchen Fall kann eine sicherere Aussage über eine starke Dampfbildung im Leitungsbereich gemacht werden.

Alternativ wird eine Dampfbildung erkannt, wenn der zweite Druckwert größer als ein zweiter Sollwert ist. Der zweite Sollwert ist als der Druck definiert, unterhalb dessen die Wassereinspritzvorrichtung als dampffrei angesehen ist.

Ferner bevorzugt ist der Drucksensor eingerichtet, den zweiten Druckwert vom ersten Druckwert vom zweiten Druckwert mit einem zeitlichen Abstand von mindestens 10 Sekunden, insbesondere 100 Sekunden, zu erfassen. Somit wird eine sichere Erkennung der Dampfbildung ermöglicht, auch wenn Druckschwankungen in der Wassereinspritzvorrichtung innerhalb von kurzer Zeit auftreten.

Nach einer besonders bevorzugten Ausgestaltung der Erfindung ist das Förderelement als Verdrängerpumpe ausgebildet. Durch die Verwendung eines Förderelements, welches nach dem Verdrängerprinzip arbeitet, ist ein nahezu abgeschlossenes System ausgebildet. Dies ermöglicht eine noch schnellere Erkennung einer Dampfbildung im Leitungsbereich zwischen dem Förderelement und dem Wasserinjektor.

Wenn eine Dampfbildung in der Wassereinspritzvorrichtung erkannt ist, ist vorteilhafterweise die Steuereinheit eingerichtet, das Förderelement und den Wasserinjektor anzusteuern, um im Leitungsbereich zwischen dem Förderelement und dem Wasserinjektor befindlichen Dampf zu entfernen. Somit kann das Förderelement schneller Druck zum Einspritzen von Wasser aufbauen. Die Wassereinspritzvorrichtung ist dadurch so schnell wie möglich betriebsbereit, wenn eine Wassereinspritzung durch die Brennkraftmaschine angefordert wird.

Alternativ oder zusätzlich ist die Steuereinheit eingerichtet, das Förderelement und den Wasserinjektor anzusteuern, um Wasser einzuspritzen, wenn eine Dampfbildung bestimmt ist. Durch das, insbesondere nicht verbrennungsrelevante, Einspritzen von Wasser wird die Temperatur der Bauteile der Brennkraftmaschine, wie z.B. eines Verteilers bei einer Vielzahl von Wasserinjektoren, reduziert. Dies kann eine zumindest teilweise Kondensation des Wasserdampfes bewirken. Hierzu können eine oder mehrere Wassereinspritzungen stattfinden.

Nach einer vorteilhaften Ausgestaltung der Erfindung ist eine Vielzahl von Wasserinjektoren vorgesehen, welche an einem Verteiler angeschlossen sind, welcher zwischen den Wasserinjektoren und dem Drucksensor angeordnet ist.

Ein weiterer Aspekt der vorliegenden Erfindung betrifft eine Brennkraftmaschine, welche eine erfindungsgemäße Wassereinspritzvorrichtung umfasst. Dabei werden die in Bezug auf die erfindungsgemäße Vorrichtung erhaltenen Vorteile ebenfalls erhalten.

Besonders bevorzugt wird die Brennkraftmaschine nach dem Otto-Prinzip und mit Benzin betrieben. Als eine Brennkraftmaschine, welche nach dem Otto-Prinzip betrieben wird, ist die Brennkraftmaschine zu verstehen, bei welcher eine Verbrennung von Benzin bzw. Benzin-Luft-Gemisch durch Fremdzündung in Form einer Zündkerze erfolgt. Da bei einer solchen Brennkraftmaschine der Zündzeitpunkt durch die Fremdzündung genau vorbestimmt ist und die Verbrennung über die Wassereinspritzung verbessert wird, können die in Bezug auf die erfindungsgemäße Wassereinspritzvorrichtung beschriebenen Vorteile komplett ausgenutzt werden. Durch die schnelle Erkennung einer Dampfbildung können schon genannte Maßnahmen getroffen werden, um kurze Druckaufbauzeiten und eine schnellstmögliche Einspritzfreigabe sicherzustellen. Somit kann auch bei schnellen Lastsprüngen eine Klopfneigung vermieden werden.

Des Weiteren betrifft die vorliegende Erfindung ein Verfahren zum Betreiben einer Wassereinspritzvorrichtung einer Brennkraftmaschine, welche ein Förderelement zur Förderung des Wassers, mindestens einen Wasserinjektor zum Einspritzen von Wasser, welcher mit dem Förderelement verbunden ist, und einen Drucksensor umfasst, welcher in einem Leitungsbereich zwischen dem Förderelement und dem Wasserinjektor angeordnet ist, wobei basierend auf Druckdaten des Drucksensors eine Dampfbildung im vorgenannten Leitungsbereich bei geschlossenem Wasserinjektor und ausgeschaltetem Förderelement bestimmt wird.

Vorzugsweise werden ein erster Druckwert zu einem ersten Zeitpunkt und ein zweiter Druckwert zu einem zweiten Zeitpunkt erfasst. Eine Dampfbildung im Leitungsbereich zwischen dem Förderelement und dem Wasserinjektor wird bestimmt, wenn ein Unterschied zwischen dem ersten Druckwert und dem zweiten Druckwert größer als ein erster Sollwert ist.

Alternativ wird eine Dampfbildung im Leitungsbereich bestimmt, wenn der zweite Druckwert größer als ein zweiter Sollwert ist.

### Kurze Beschreibung der Zeichnungen

Nachfolgend wird ein bevorzugtes Ausführungsbeispiel der Erfindung unter Bezugnahme auf die begleitende Zeichnung im Detail beschrieben. In der Zeichnung ist:
- Figur 1: eine stark vereinfachte schematische Ansicht einer Brennkraftmaschine mit einer Wassereinspritzvorrichtung gemäß dem bevorzugten Ausführungsbeispiel der vorliegenden Erfindung,
- Figur 2: eine vereinfachte schematische Ansicht der Wassereinspritzvorrichtung gemäß dem bevorzugten Ausführungsbeispiel, und
- Figur 3: ein Diagramm, in welchem ein zeitlicher Verlauf der Temperatur sowie ein entsprechender Verlauf des Drucks in einem Leitungsbereich der erfindungsgemäßen Vorrichtung dargestellt sind.

### Bevorzugte Ausführungsform der Erfindung

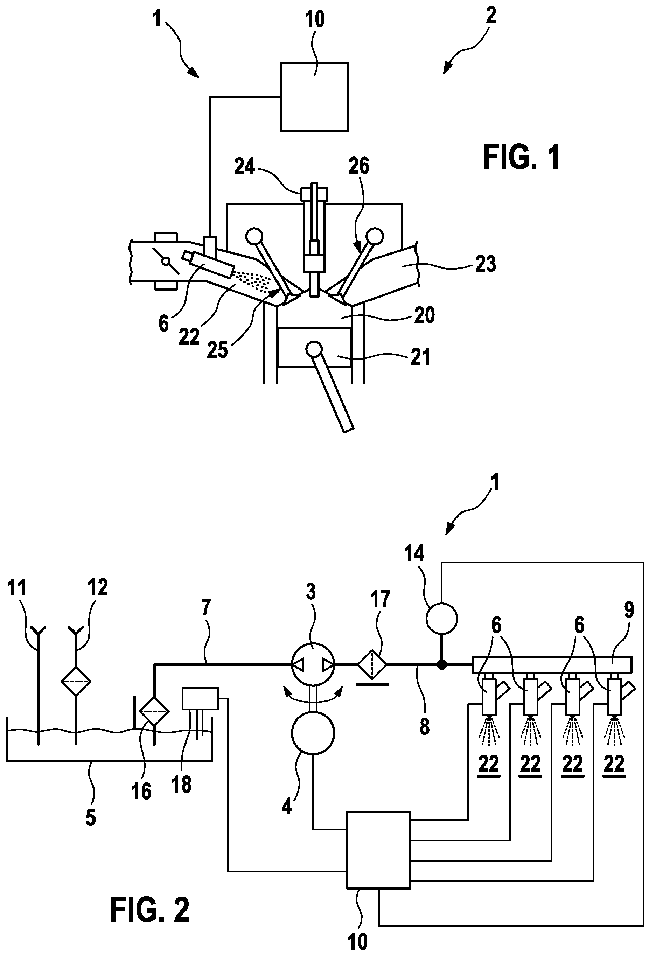

Nachfolgend wird unter Bezugnahme auf die Figuren 1 bis 3 eine Wassereinspritzvorrichtung 1 einer Brennkraftmaschine 2 gemäß einem bevorzugten Ausführungsbeispiel der vorliegenden Erfindung im Detail beschrieben. Insbesondere wird die Brennkraftmaschine 2 nach dem Otto-Prinzip und mit Benzindirekteinspritzung betrieben.

In Figur 1 ist die Brennkraftmaschine 2 schematisch dargestellt, welche eine Vielzahl von Zylindern aufweist, sowie ein Teil der erfindungsgemäßen Wassereinspritzvorrichtung 1. Die Brennkraftmaschine 2 umfasst pro Zylinder einen Brennraum 20, in welchem ein Kolben 21 hin und her bewegbar ist. Ferner weist vorzugsweise die Brennkraftmaschine 2 pro Zylinder zwei Einlassventile 25 mit jeweils einem Einlasskanal 22 auf, über welche Luft zum Brennraum 20 zugeführt wird. Abgas wird über einen Abgaskanal 23 abgeführt. Hierzu ist am Abgaskanal 23 ein Auslassventil 26 angeordnet. Das Bezugszeichen 24 bezeichnet ferner ein Kraftstoffeinspritzventil.

An jedem Einlasskanal 22 ist ferner ein Wasserinjektor 6 angeordnet, welcher über eine Steuereinheit 10 Wasser in den Einlasskanal 22 der Brennkraftmaschine 2 einspritzt. In diesem Ausführungsbeispiel sind zwei Wasserinjektoren 6 pro Zylinder vorgesehen, was zur besseren Aufbereitung oder zur Erhöhung der pro Verbrennungszyklus maximal einspritzbaren Wassermenge führt. Alternativ kann ein Wasserinjektor pro Zylinder angeordnet sein.

In Figur 2 ist die erfindungsgemäße Wassereinspritzvorrichtung im Detail gezeigt. Die Wassereinspritzvorrichtung 1 umfasst ein in der Form einer Pumpe ausgebildetes Förderelement 3 und einen elektrischen Antrieb 4 zum Antreiben der Pumpe. Insbesondere ist die Pumpe eine Verdrängerpumpe.

Des Weiteren ist ein Wassertank 5 vorgesehen, welcher durch eine erste Leitung 7 mit der Förderelement 3 verbunden ist. Eine zweite Leitung 8 (Leitungsbereich) verbindet das Förderelement 3 mit einem Verteiler 9 bzw. einem Rail, an welchem eine Vielzahl von Wasserinjektoren 6 angeschlossen ist. Die zweite Leitung 8 mit dem Verteiler 9 entspricht dem Leitungsbereich zwischen dem Förderelement 3 und den Wasserinjektoren 6.

Zum Einspritzen von Wasser in die Einlasskanäle 22 der Brennkraftmaschine 2 wird Wasser aus dem Wassertank 5 durch das Förderelement 3 in die Wasserinjektoren 6 gefördert. Dafür wird bevorzugt ein Kondensat eines nicht gezeigten Verdampfers einer Klimaanlage verwendet, wozu die erfindungsgemäße Vorrichtung 1 zur Einspritzung von Wasser eine Zulaufleitung 11 aufweist.

Alternativ oder zusätzlich zum Kondensat kann deionisiertes Wasser über eine Nachfüllleitung 12 in den Wassertank 5 gefördert werden. In der Nachfüllleitung 12 kann optional ein Sieb vorgesehen sein. Ferner sind ein Vorfilter 16 in der ersten Leitung 7 und ein Feinfilter 17 in der zweiten Leitung 8 angeordnet. Der Vorfilter 16 und der Feinfilter 17 sind optional beheizbar. Ferner ist ein Wasserfüllstands- und/oder Temperatursensor 18 für das im Wassertank 5 befindliche Wasser vorgesehen, welcher über die Steuereinheit 10 steuerbar ist.

Um zu bestimmen, ob eine Dampfbildung in der Wassereinspritzvorrichtung 1 vorhanden ist, wenn die Wasserinjektoren 6 geschlossen und das Förderelement 3 ausgeschaltet sind, ist ein Drucksensor 14 in der zweiten Leitung 8 vorgesehen. Der Drucksensor 14 wird über die Steuereinheit 10 angesteuert. Ein Fall, in welchem die Wasserinjektoren 6 geschlossen sind und das Förderelement 3 ausgeschaltet ist, was einer inaktiver Wassereinspritzung entspricht, kann z.B. während einer Stoppphase eines Stopp-Start-Systems vorkommen. Während dieser Phase ist keine Wassereinspritzung angefordert, da die Brennkraftmaschine ausgeschaltet ist. Dabei kann sich das in der zweiten Leitung 8 und dem Verteiler 9 stehende Wasser aufheizen und zu einer Dampfbildung führen.

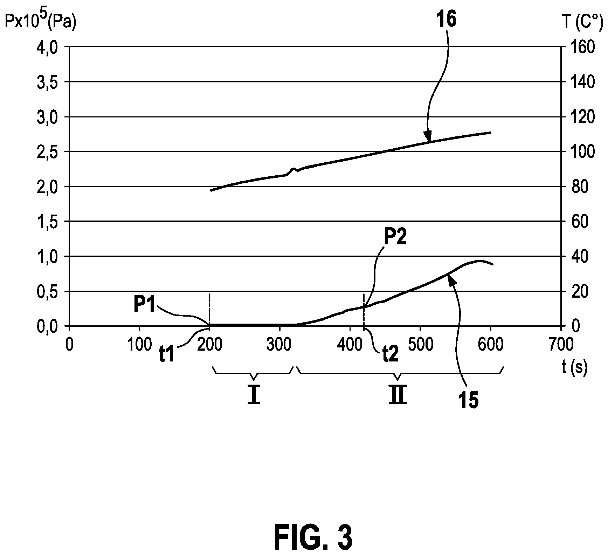

Dies wird anhand der Figur 3 beschrieben, welche ein Diagramm zeigt, in dem ein zeitlicher Verlauf eines erfassten Systemdrucks P in der zweiten Leitung 8 am Verteiler 9 und ein zeitlicher Verlauf der Temperatur T des Verteilers 9 gemäß dem bevorzugten Ausführungsbeispiel dargestellt sind.

Der zeitliche Verlauf des erfassten Systemdrucks P ist mit dem Bezugszeichen 15 und der zeitliche Verlauf der Temperatur T mit dem Bezugszeichen 16 versehen. Der Verlauf 15 des Systemdrucks P ist in einen ersten Diagrammbereich I und einen zweiten Diagrammbereich II aufgeteilt. Die x-Achse bezeichnet die Zeit t in s und die y-Achse die Temperatur in °C sowie den erfassten Druck P x 10⁵ in Pa. Zum Erfassen der Temperatur am Verteiler 9 kann ein in der Figur 2 nicht gezeigter Temperatursensor vorgesehen sein.

Wie aus der Figur 3 ersichtlich ist, bleibt der Druck im ersten Diagrammbereich I im Wesentlichen unverändert. Der erste Diagrammbereich I entspricht der Phase, während welcher das im Leitungsbereich 8 zwischen dem Förderelement 3 und den Wasserinjektoren 6 befindliche Wasser, z.B. durch die immer noch heiße Brennkraftmaschine, erwärmt wird. Das stimmt mit dem Anstieg der Temperatur des Verteilers 9 im ersten Diagrammbereich I überein.

Ab einem bestimmten Zeitpunkt wird die Siedetemperatur des Wassers erreicht, wodurch Dampf entsteht. Es entsteht ein Druckgefälle über das Förderelement 3 da der Dampf in diese Richtung ausdehnt und der Druck im Leitungsbereich 8 steigt deutlich an. Das entspricht dem zweiten Diagrammbereich II in der Figur 3.

Um eine solche Dampfbildung in der zweiten Leitung 8 und dem Verteiler 9 zu erkennen, werden die durch den Drucksensor 14 erfassten Druckdaten durch die Steuereinheit 10 verarbeitet bzw. miteinander verglichen.

Insbesondere werden ein erster Druckwert P1 zu einem ersten Zeitpunkt t1 und ein zweiter Druckwert P2 zu einem zweiten Zeitpunkt t2 über den Drucksensor 14 erfasst, welcher nach dem ersten Zeitpunkt t1 liegt.

Die Steuereinheit 10 ist eingerichtet, den ersten Druckwert P1 mit dem zweiten Druckwert P2 zu vergleichen. Insbesondere wird durch die Steuereinheit 10 bestimmt, ob ein Unterschied zwischen dem ersten Druckwert P1 und dem zweiten Druckwert P2 größer als ein erster Sollwert ist. Der erste Sollwert ist als die Druckdifferenz definiert, unterhalb welcher erkannt wird, dass keine Dampfbildung vorhanden ist.

Alternativ kann der zweite Druckwert P2 mit einem zweiten Sollwert verglichen werden. Der zweite Sollwert entspricht dem Druck, unterhalb dessen erkannt wird, dass keine Dampfbildung entstanden ist. Das heißt, dass kein Dampf vorhanden ist, wenn der zweite Druckwert P2 kleiner als der zweite Sollwert ist.

Im Rahmen der Erfindung ist es auch möglich, eine größere Anzahl von Druckwerten zu erfassen. So kann der Druck nicht nur zu den Zeitpunkten t1 und t2 erfasst werden.

Wenn ein Druckanstieg nach einer abgelaufenen Zeitperiode (in diesem Fall nach dem Zeitpunkt t2) erkannt wird, in welcher der Druck unverändert bleibt, wird festgestellt, dass eine Dampfbildung in der zweiten Leitung 8 und dem Verteiler 9 stattgefunden hat.

Sobald durch die Steuereinheit 10 basierend auf den erfassten Druckwerten des Drucksensors 14 erkannt wird, dass Dampf im Leitungsbereich 8 existiert, werden das Förderelement 3 und die Wasserinjektoren 6 so betrieben, dass der schon entstandene Dampf aus der Wassereinspritzvorrichtung 1 entfernt wird. Außerdem können eine oder mehrere Wassereinspritzungen erfolgen, wodurch mindestens ein Teil des Dampfes kondensiert. Durch das eingespritzte Wasser wird auch der Verteiler 9 abgekühlt, was zu einer Vermeidung einer Weiterbildung von Dampf führt.

Nachdem der erforderliche Systemdruck aufgebaut ist, kann eine verbrennungsbedingte Wassereinspritzung erfolgen.

Die erfindungsgemäße Wassereinspritzvorrichtung 1 bietet den Vorteil einer schnellen Vermittlung deren Betriebsbereitschaft und der Freigabe der Einspritzung bei dem erforderlichen Systemdruck. Ferner kann ein verzögerter Druckaufbau bei Dampfbildung schnell erkannt werden. Hierzu kann auf zusätzliche Bauteile, wie z.B. auf Absperrelemente im Leitungsbereich zwischen dem Förderelement 3 und den Wasserinjektoren 6, verzichtet werden, was zu einem kostengünstigeren und kompakten Aufbau der erfindungsgemäßen Wassereinspritzvorrichtung 1 führt.

## Patentansprüche

1. Wassereinspritzvorrichtung einer Brennkraftmaschine (2), umfassend:
- einen Wassertank (5) zur Speicherung von Wasser;
- ein Förderelement (3) zur Förderung des Wassers, wobei das Förderelement (3) mit dem Wassertank (5) verbunden ist,
- mindestens einen Wasserinjektor (6) zum Einspritzen von Wasser, welcher mit dem Förderelement (3) verbunden ist,
- einen Drucksensor, welcher in einem Leitungsbereich (8) zwischen dem Förderelement und dem Wasserinjektor (6) angeordnet ist, und
- eine Steuereinheit (10), welche eingerichtet ist, basierend auf Druckdaten des Drucksensors (14) eine Dampfbildung im vorgenannten Leitungsbereich (8) bei geschlossenem Wasserinjektor (6) und ausgeschaltetem Förderelement zu bestimmen.

2. Wassereinspritzvorrichtung nach Anspruch 1, wobei die Steuereinheit (10) eingerichtet ist, einen ersten Druckwert (P1) mit einem zweiten Druckwert (P2) zu vergleichen, wobei der erste Druckwert (P1) zu einem ersten Zeitpunkt (t1) und der zweite Druckwert (P2) zu einem zweiten Zeitpunkt (t2) erfasst sind, und eine Dampfbildung im Leitungsbereich (8) zwischen dem Förderelement (3) und dem Wasserinjektor (6) zu bestimmen, wenn der Unterschied zwischen dem ersten Druckwert (P1) und dem zweiten Druckwert (P2) größer als ein erster Sollwert ist, wobei der erste Sollwert bei dampffreier Wassereinspritzvorrichtung bestimmt ist.

3. Wassereinspritzvorrichtung nach Anspruch 2, wobei der Drucksensor (14) eingerichtet ist, den zweiten Druckwert (P2) vom ersten Druckwert (P1) mit einem zeitlichen Abstand von mindestens 10 Sekunden, insbesondere 100 Sekunden zu erfassen.

4. Wassereinspritzvorrichtung nach einem der vorherigen Ansprüche, wobei das Förderelement als Verdrängerpumpe ausgebildet ist.

5. Wassereinspritzvorrichtung nach einem der vorherigen Ansprüche, wobei die Steuereinheit (10) eingerichtet ist, das Förderelement (3) und den Wasserinjektor (6) anzusteuern, um im Leitungsbereich (8) zwischen dem Förderelement (3) und dem Wasserinjektor (6) befindlichen Dampf zu entfernen, wenn eine Dampfbildung bestimmt ist.

6. Wassereinspritzvorrichtung nach einem der vorherigen Ansprüche, wobei die Steuereinheit (10) eingerichtet ist, das Förderelement (3) und den Wasserinjektor (6) anzusteuern, um Wasser einzuspritzen, wenn eine Dampfbildung bestimmt ist.

7. Wassereinspritzvorrichtung nach einem der vorherigen Ansprüche, wobei eine Vielzahl von Wasserinjektoren (6) vorgesehen ist, welche an einem Verteiler (9) angeschlossen sind, welcher zwischen den Wasserinjektoren (6) und dem Drucksensor (14) angeordnet ist.

8. Brennkraftmaschine, welche eine Wassereinspritzvorrichtung (1) nach einem der vorherigen Ansprüche umfasst.

9. Brennkraftmaschine nach Anspruch 8, welche eingerichtet ist, mit Benzin und nach dem Otto-Prinzip betrieben zu werden.

10. Verfahren zum Betreiben einer Wassereinspritzvorrichtung einer Brennkraftmaschine (2), welche ein Förderelement (3) zur Förderung des Wassers, mindestens einen Wasserinjektor (6) zum Einspritzen von Wasser, welcher mit dem Förderelement (3) verbunden ist, und einen Drucksensor (14) umfasst, welcher in einem Leitungsbereich (8) zwischen dem Förderelement (3) und dem Wasserinjektor (6) angeordnet ist, wobei basierend auf Druckdaten des Drucksensors (14) eine Dampfbildung im vorgenannten Leitungsbereich (8) bei geschlossenem Wasserinjektor (6) und ausgeschaltetem Förderelement (3) bestimmt wird.

11. Verfahren nach Anspruch 10, wobei ein erster Druckwert (P1) zu einem ersten Zeitpunkt (t1) und ein zweiter Druckwert (P2) zu einem zweiten Zeitpunkt (t2) erfasst werden, und eine Dampfbildung im Leitungsbereich (8) zwischen dem Förderelement (3) und dem Wasserinjektor (6) bestimmt wird, wenn ein Unterschied zwischen dem ersten Druckwert (P1) und dem zweiten Druckwert (P2) größer als ein erster Sollwert ist, wobei der erste Sollwert bei dampffreier Wassereinspritzvorrichtung bestimmt ist.

## Claims

1. Water injection device of an internal combustion engine (2), comprising:
- a water tank (5) for storing water;
- a conveying element (3) for conveying the water, wherein the conveying element (3) is connected to the water tank (5),
- at least one water injector (6) for injecting water which is connected to the conveying element (3),
- a pressure sensor which is arranged in a line region (8) between the conveying element and the water injector (6), and
- a control unit (10) which is configured, based on pressure data of the pressure sensor (14), to determine a formation of steam in the above-mentioned line region (8) in the case of a closed water injector (6) and switched off conveying element.

2. Water injection device according to Claim 1, wherein the control unit (10) is configured to compare a first pressure value (P1) with a second pressure value (P2), wherein the first pressure value (P1) is recorded at a first point in time (t1) and the second pressure value (P2) is recorded at a second point in time (t2), and to determine a formation of steam in the line region (8) between the conveying element (3) and the water injector (6) if the difference between the first pressure value (P1) and the second pressure value (P2) is greater than a first setpoint value, wherein the first setpoint value is determined in the case of a steam-free water injection device.

3. Water injection device according to Claim 2, wherein the pressure sensor (14) is configured to record the second pressure value (P2) with a time interval of at least 10 seconds, in particular 100 seconds, from the first pressure value (P1).

4. Water injection device according to any one of the preceding claims, wherein the conveying element is formed as a displacement pump.

5. Water injection device according to any one of the preceding claims, wherein the control unit (10) is configured to actuate the conveying element (3) and the water injector (6) in order to remove steam located in the line region (8) between the conveying element (3) and the water injector (6) if a formation of steam is determined.

6. Water injection device according to any one of the preceding claims, wherein the control unit (10) is configured to actuate the conveying element (3) and the water injector (6) in order to inject water if a formation of steam is determined.

7. Water injection device according to any one of the preceding claims, wherein a plurality of water injectors (6) are provided which are connected to a distributor (9) which is arranged between the water injectors (6) and the pressure sensor (14).

8. Internal combustion engine which comprises a water injection device (1) according to any one of the preceding claims.

9. Internal combustion engine according to Claim 8, which is configured to be operated with petrol and according to the Otto principle.

10. Method for operating a water injection device of an internal combustion engine (2) which comprises a conveying element (3) for conveying the water, at least one water injector (6) for injection of water which is connected to the conveying element (3), and a pressure sensor (14) which is arranged in a line region (8) between the conveying element (3) and the water injector (6), wherein, based on pressure data of the pressure sensor (14), a formation of steam in the above-mentioned line region (8) in the case of a closed water injector (6) and switched off conveying element (3) is determined.

11. Method according to Claim 10, wherein a first pressure value (P1) is recorded at a first point in time (t1) and a second pressure value (P2) is recorded at a second point in time (t2), and a formation of steam is determined in the line region (8) between the conveying element (3) and the water injector (6) if a difference between the first pressure value (P1) and the second pressure value (P2) is greater than a first setpoint value, wherein the first setpoint value is determined in the case of a steam-free water injection device.

## Revendications

1. Dispositif d'injection d'eau d'un moteur à combustion interne (2), comportant :
- un réservoir d'eau (5) servant à stocker de l'eau ;
- un élément de refoulement (3) servant à refouler l'eau, dans lequel l'élément de refoulement (3) est relié au réservoir d'eau (5),
- au moins un injecteur d'eau (6) servant à injecter de l'eau, lequel est relié à l'élément de refoulement (3),
- un capteur de pression, lequel est disposé dans une région de conduite (8) entre l'élément de refoulement et l'injecteur d'eau (6), et
- une unité de commande (10), laquelle est conçue pour, sur la base de données de pression du capteur de pression (14), déterminer une formation de vapeur dans ladite région de conduite (8) lorsque l'injecteur d'eau (6) est fermé et que l'élément de refoulement est arrêté.

2. Dispositif d'injection d'eau selon la revendication 1, dans lequel l'unité de commande (10) est conçue pour comparer une première valeur de pression (P1) à une deuxième valeur de pression (P2), la première valeur de pression (P1) étant enregistrée à un premier instant (t1) et la deuxième valeur de pression (P2) étant enregistrée à un deuxième instant (t2), et pour déterminer une formation de vapeur dans la région de conduite (8) entre l'élément de refoulement (3) et l'injecteur d'eau (6) lorsque la différence entre la première valeur de pression (P1) et la deuxième valeur de pression (P2) est supérieure à une première valeur de consigne, la première valeur de consigne étant déterminée dans le cas d'un dispositif d'injection d'eau dépourvu de vapeur.

3. Dispositif d'injection d'eau selon la revendication 2, dans lequel le capteur de pression (14) est conçu pour enregistrer la deuxième valeur de pression (P2) à un intervalle temporel d'au moins 10 secondes, en particulier de 100 secondes, à partir de la première valeur de pression (P1).

4. Dispositif d'injection d'eau selon l'une des revendications précédentes, dans lequel l'élément de refoulement est réalisé sous forme de pompe volumétrique.

5. Dispositif d'injection d'eau selon l'une des revendications précédentes, dans lequel l'unité de commande (10) est conçue pour commander l'élément de refoulement (3) et l'injecteur d'eau (6), pour retirer la vapeur se trouvant dans la région de conduite (8) entre l'élément de refoulement (3) et l'injecteur d'eau (6), lorsqu'une formation de vapeur est déterminée.

6. Dispositif d'injection d'eau selon l'une des revendications précédentes, dans lequel l'unité de commande (10) est conçue pour commander l'élément de refoulement (3) et l'injecteur d'eau (6), afin d'injecter de l'eau lorsqu'une formation de vapeur est déterminée.

7. Dispositif d'injection d'eau selon l'une des revendications précédentes, dans lequel une pluralité d'injecteur d'eau (6) sont prévus, lesquels sont raccordés à un distributeur (9), lequel est disposé entre les injecteurs d'eau (6) et le capteur de pression (14).

8. Moteur à combustion interne, lequel comporte un dispositif d'injection d'eau (1) selon l'une des revendications précédentes.

9. Moteur à combustion interne selon la revendication 8, lequel est conçu pour fonctionner à l'essence et selon le principe d'Otto.

10. Procédé permettant de faire fonctionner un dispositif d'injection d'eau d'un moteur à combustion interne (2), lequel comporte un élément de refoulement (3) servant à refouler l'eau, au moins un injecteur d'eau (6) servant à injecter de l'eau, lequel est relié à l'élément de refoulement (3), et un capteur de pression (14), lequel est disposé dans une région de conduite (8) entre l'élément de refoulement (3) et l'injecteur d'eau (6), dans lequel sur la base de données de pression du capteur de pression (14), une formation de vapeur dans ladite région de conduite (8) est déterminée lorsque l'injecteur d'eau est fermé (6) et que l'élément de refoulement (3) est arrêté.

11. Procédé selon la revendication 10, dans lequel une première valeur de pression (P1) est enregistrée à un premier instant (t1) et une deuxième valeur de pression (P2) est enregistrée à un deuxième instant (t2), et une formation de vapeur dans la région de conduite (8) entre l'élément de refoulement (3) et l'injecteur d'eau (6) est déterminée lorsqu'une différence entre la première valeur de pression (P1) et la deuxième valeur de pression (P2) est supérieure à une première valeur de consigne, dans lequel la première valeur de consigne est déterminée dans le cas d'un dispositif d'injection d'eau dépourvu de vapeur.
